# FASCICULE DE BREVET EUROPEEN

(11) **EP 2 350 994 B1**
(45) Date de publication et mention de la délivrance du brevet: **28.02.2018**
(21) Numéro de dépôt: 09748292.1
(22) Date de dépôt: 26.10.2009
(51) Int. Cl.: G08C 17/02, H04Q 9/00

(54) **SYSTèME DOMOTIQUE ET PROCéDéS DE CONFIGURATION ET D'UTILISATION ASSOCIéS**
HAUSAUTOMATISIERUNGSSYSTEM UND DIESBEZÜGLICHES KONFIGURATIONSVERFAHREN UND VERWENDUNGSVERFAHREN
HOME AUTOMATION SYSTEM, AND ASSOCIATED CONFIGURATION METHOD AND METHOD OF USE

(30) Priorité: 27.10.2008 FR 0857273
(43) Date de publication de la demande: 03.08.2011
(73) Titulaire: Bouygues Telecom, 75116 Paris (FR)
(72) Inventeur: COPPOLANI, Philippe, F-78990 Elancourt (FR)
(74) Mandataire: Regimbeau
(86) Numéro de dépôt international: PCT/EP2009/064070
(87) Numéro de publication internationale: WO 2010/049383

(56) Documents cités:
- EP-A1- 2 015 274
- US-A1- 2004 070 491
- US-A1- 2008 088 474
- US-A1- 2008 094 181
- US-A1- 2008 094 245

## Description

Le domaine de l'invention est celui de la domotique.

L'invention concerne plus précisément un système domotique ainsi que des procédés de configuration et d'utilisation d'un système domotique mettant en oeuvre des radio-étiquettes dans lesquelles peuvent être écrites et lues, à l'aide d'une unité portable comprenant un module de communication sans contact, des commandes correspondant à l'exécution d'une action par un équipement domotique.

La domotique est basée sur la mise en réseau de différents équipements électriques domestiques (lampes, portes ou radiateurs par exemple) contrôlés par une « intelligence » centralisée qui permet de leur faire passer des commandes domotiques pour des actions devant être exécutées (marche/arrêt, ouverture/fermeture, augmentation/diminution par exemple). L'intelligence qui gère ces commandes est typiquement une centrale de commande domotique à laquelle peuvent être adjoints des outils de pilotages de type télécommande.

On connaît ainsi du document EP 1 732 050 un système domotique comprenant une centrale à laquelle des équipements domotiques sont reliés et un téléphone portable faisant office de télécommande en ce qu'il est chargé de fournir à la centrale une commande pour l'exécution d'une action par un équipement, la commande étant ensuite relayée par la centrale à destination de l'équipement concerné.

On connaît en outre du document US 2008/0088474 un système domotique dans lequel une télécommande commande directement des équipements.

On connaît par ailleurs du document EP 2 015 274 un système domotique comprenant une centrale à laquelle des équipements domotiques sont reliés et une unité portable configurée pour lire un identifiant d'un équipement écrit dans une radio-étiquette. Une pluralité de commandes domotiques sont affichées sur un écran de l'unité portable, en vue d'une sélection de l'une d'entre elles par un utilisateur de l'unité portable.

La configuration et l'utilisation des systèmes domotiques existants peuvent s'avérer relativement fastidieuses, voire même complexes pour les non-initiés (du fait notamment de télécommandes sophistiquées, spécifiques à chaque équipement).

L'invention a pour objectif de simplifier l'utilisation et la configuration de systèmes domotiques, et propose à cet effet selon un premier aspect, un système domotique comprenant une centrale de commande permettant d'envoyer à un ou plusieurs équipements auxquels elle est reliée des commandes domotiques correspondant à des actions devant être exécutées, et une unité portable comportant des moyens pour établir une liaison de communication avec la centrale, caractérisé en ce que l'unité portable comporte un module de communication sans contact et en ce l'unité portable est configurée pour, dans une phase d'utilisation du système domotique, lire, via le module de communication sans contact, une commande domotique écrite dans une radio-étiquette située à proximité de l'unité portable qui correspond à une action devant être exécutée par un équipement, et faire suivre à la centrale, via la liaison de communication avec la centrale, la commande lue sur la radio-étiquette, de sorte que l'action puisse être exécutée par l'équipement après envoi de la commande à l'équipement depuis la centrale.

Selon un second aspect, l'unité portable est configurée pour, dans une phase de configuration du système domotique, recevoir depuis la centrale, via la liaison de communication avec la centrale, une commande correspondant à une action devant être exécutée par un équipement, et écrire, par le module de communication sans contact, ladite commande dans une radio-étiquette située à proximité de l'unité portable ;

Certains aspects préférés, mais non limitatifs, de ce système sont les suivants :
- la centrale comporte une radio-étiquette apte à être lue par le module de communication sans contact de l'unité portable dans laquelle sont écrites des informations utiles à l'établissement de la liaison de communication entre la centrale et l'unité portable ; et
- le système comprend en outre un module de paramétrage stockant une table regroupant une liste des actions pouvant être exécutées par les équipements et une liste des commandes correspondantes.

Selon un troisième aspect, l'invention propose un procédé d'utilisation d'un système domotique comprenant une centrale de commande permettant d'envoyer à un ou plusieurs équipements auxquels elle est reliée des commandes correspondant à des actions devant être exécutées, et une unité portable comportant des moyens pour établir une liaison de communication avec la centrale ainsi qu'un module de communication sans contact, comprenant les étapes consistant pour l'unité portable à lire, via le module de communication sans contact, une commande écrite dans une radio-étiquette située à proximité de l'unité portable qui correspond à une action devant être exécutée par un équipement, et à faire suivre à la centrale, via la liaison de communication avec la centrale, la commande lue sur la radio-étiquette, de sorte que l'action puisse être exécutée par l'équipement après envoi de la commande à l'équipement depuis la centrale.

Selon un quatrième aspect, l'invention propose un procédé de configuration d'un système domotique comprenant une centrale de commande permettant d'envoyer à un ou plusieurs équipements auxquels elle est reliée des commandes correspondant à des actions devant être exécutées, et une unité portable comportant des moyens pour établir une liaison de communication avec la centrale ainsi qu'un module de communication sans contact, comprenant les étapes consistant pour l'unité portable à recevoir depuis la centrale, via la liaison de communication avec la centrale, une commande correspondant à une action devant être exécutée par un équipement, et à écrire, par le module de communication sans contact, ladite commande dans une radio-étiquette située à proximité de l'unité portable.

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est un schéma illustrant les étapes mises en oeuvre au cours de la configuration d'un système domotique conforme au premier aspect de l'invention ;
- la figure 2 est un schéma illustrant les étapes mises en oeuvre au cours de l'utilisation d'un système domotique conforme au premier aspect de l'invention.

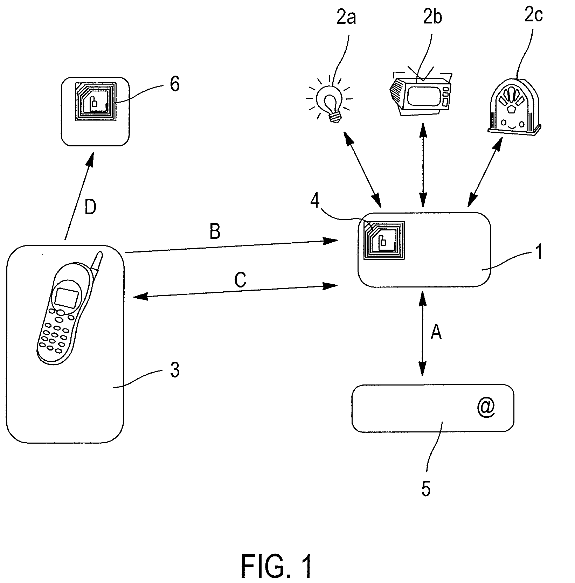

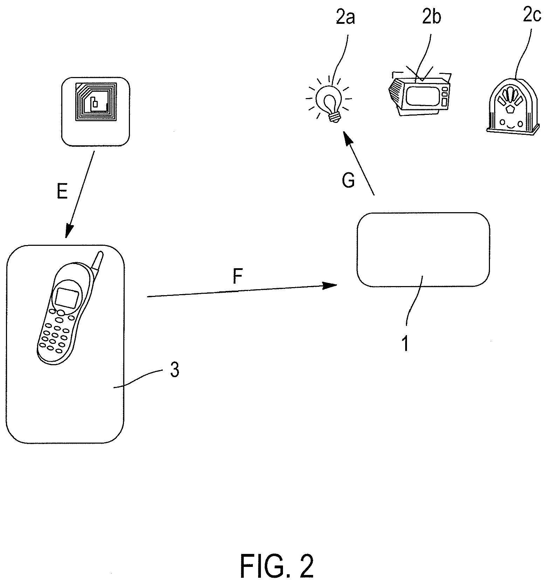

Selon ses premier et second aspects, et en référence aux figures 1 et 2, l'invention concerne un système domotique comprenant une centrale de commande 1 permettant d'envoyer à un ou plusieurs équipements 2a, 2b, 2c auxquels elle est reliée des commandes domotiques correspondant à des actions devant être exécutées.

A titre d'exemples non limitatifs, les équipements 2a, 2b, 2c peuvent être des lampes, prises, téléviseur, radio, portes, radiateurs, etc. Les commandes correspondent typiquement aux actions suivantes devant être exécutées : actions de type marche/arrêt, ouverture/fermeture, augmentation/diminution, ou encore lecture de l'état d'un capteur.

La centrale de commande 1 et les équipements 2a, 2b, 2c sont configurés pour dialoguer selon un protocole domotique, par exemple le protocole X10. Selon ce protocole X10, une commande est structurée sous la forme d'une trame présentant une partie adresse et une partie commande envoyée par la centrale 1 à tous les équipements 2a, 2b, 2c en même temps. Seuls les équipements 2a, 2b, 2c correctement adressés (via la partie adresse) exécutent les ordres donnés (action à exécuter codée dans la partie commande).

La centrale de commande 1 peut communiquer directement avec les différents équipements 2a, 2b, 2c. En variante, la centrale de commande peut être reliée à un module contrôleur (non représenté) apte à communiquer directement avec les équipements 2a, 2b, 2c.

Le système domotique comporte par ailleurs une unité portable 3 comportant des moyens pour établir une liaison de communication avec la centrale 1.

L'unité portable 3 comporte en outre un module de communication sans contact (mettant par exemple en oeuvre la technologie de communication en champ proche NFC - « Near Field Communication ») adapté pour permettre la lecture/écriture d'informations sur/depuis une radio-étiquette (ou « tag ») lorsque cette dernière est positionnée à proximité de l'unité portable 3.

Selon un mode de réalisation préférentiel de l'invention, l'unité portable 3 et la centrale 1 comportent chacune un module de communication sans fil, de sorte que la liaison de communication entre la centrale et l'unité portable est une liaison de communication sans fil.

La liaison de communication sans fil peut par exemple être établie selon l'un des protocoles suivants : Bluetooth™, Wi-Fi, ZigBee, HomeRF.

Selon un autre mode de réalisation possible, la liaison de communication entre la centrale 1 et l'unité portable 2 fait intervenir un réseau de télécommunication cellulaire (type réseau GSM). A titre d'exemple, l'unité portable 3 dispose de moyens pour établir une communication avec une station de base d'un réseau de télécommunication cellulaire, et la centrale 1 dispose de moyens pour établir une communication avec un réseau de communication filaire (type réseau téléphonique commuté RTC) accessible par l'opérateur du réseau de télécommunication cellulaire.

Dans les deux modes de réalisation évoqués ci-dessus, il est avantageusement prévu que la centrale 1 comporte une radio-étiquette (portant la référence 4 sur la figure 1), positionnée sur la centrale ou incorporée dans celle-ci, apte à être lue par le module de communication sans contact de l'unité portable et dans laquelle sont écrites des informations utiles à l'établissement de la liaison de communication entre la centrale et l'unité portable. Ces informations comprennent ainsi notamment des informations d'identification/appariement de l'unité portable à la centrale.

Un tel mode de réalisation s'avère avantageux pour ce qui concerne la sécurité. Tout d'abord, une unité portable ne disposant pas des paramètres de connexion ne peut pas établir une liaison avec la centrale. Par ailleurs, même dans le cas où, sans avoir réalisée cet appariement/identification, l'unité portable dialoguerait tout de même avec la centrale, les ordres transmis à la centrale ne seraient pas exécutés. En effet, lors de l'établissement de la liaison, l'unité portable peut également transmettre à la centrale un identifiant, ce qui permet à la centrale de gérer les droits d'accès de différentes unités portables. Ainsi en phase d'utilisation, une unité portable pourra être amenée à transmettre, en sus de la commande lue sur une radio-étiquette, son identifiant.

A titre d'exemple de réalisation :
- lorsque la liaison de communication entre la centrale et l'unité portable est une liaison sans fil de type Bluetooth™, la radio-étiquette de la centrale stocke un code pin permettant de valider la connexion que l'unité portable va pouvoir lire sans contact afin d'établir la première connexion sans fil avec la centrale,
- dans le cas d'une liaison sans fil de type Wi-Fi, la radioétiquette stocke une adresse IP de la centrale ainsi qu'un SSID (permettant d'authentifier l'unité portable) et un mot de passe,
- dans le cas d'une liaison faisant intervenir un réseau cellulaire, la radio-étiquette de la centrale stocke le MSISDN, l'APN et le nom du site ainsi qu'une adresse réseau de la centrale que l'unité portable va pouvoir lire sans contact afin d'établir la première connexion avec la centrale.

On décrit ci-après en liaison avec la figure 1 un mode de réalisation possible d'une phase de configuration du système domotique selon le premier aspect de l'invention.

Un module de paramétrage 5 stocke une table regroupant une liste des équipements 2a, 2b, 2c reliés à la centrale de commande 1, une liste des actions pouvant être exécutées par les équipements 2a, 2b, 2c et une liste des commandes domotiques correspondantes.

Le module de paramétrage 5 est par exemple un site Web intégré au sein de la centrale de commande 1 ou bien un site Web distant auquel la centrale peut accéder (première étape portant la référence A sur la figure 1).

On notera que la table peut être enrichie par ajout d'un nouvel équipement et chargement des actions (et des commandes correspondantes) pouvant être exécutées par cet équipement, par chargement d'une nouvelle action (et de la commande correspondante) pour un équipement existant.

Selon une seconde étape B, mise en oeuvre notamment avant la toute première connexion de l'unité portable à la centrale, l'unité portable 3 lit la radio-étiquette 4 de la centrale 1 de manière à récupérer les informations nécessaires à l'établissement de la liaison de la communication avec la centrale 1.

Selon une troisième étape C, la centrale 1 communique à l'unité portable 3, via la liaison de communication établie à l'étape B, la table regroupant la liste des équipements 2a, 2b, 2c reliés à la centrale 1, la liste des actions pouvant être exécutées par les équipements 2a, 2b, 2c et une liste des commandes correspondantes. L'unité portable 3 est donc configurée pour recevoir une commande correspondant à une action devant être exécutée par l'un des équipements 2a, 2b, 2c.

Au cours d'une quatrième étape D, une radio-étiquette 6 est positionnée à proximité de l'unité portable 3 de telle manière que le module de communication sans contact de l'unité portable peut écrire des informations vers la radio-étiquette 6. En utilisant par exemple une interface utilisateur affichée sur des moyens prévus à cet effet sur l'unité portable 3, un utilisateur de l'unité portable peut choisir une action dans la table. La commande correspondante à cette action est alors écrite, via le module sans contact, par l'unité portable 3 dans la radio-étiquette 6. L'unité portable est donc configurée pour écrire, via le module de communication sans contact, une commande correspondant à une action devant être exécutée par un équipement 2a, 2b, 2c dans la radio-étiquette 6.

En option, l'unité portable réalise une écriture sécurisée de la commande dans la radio-étiquette. De telle manière, on empêche une nouvelle écriture dans la radio-étiquette par un équipement différent de l'unité portable utilisée. Une radio-étiquette est effectivement reprogrammable à l'infini. En mode sécurisé toutefois, une radio-étiquette ne peut être reprogrammée que par une seule unité portable. En mode non sécurisé, n'importe quelle unité portable peut servir.

Les étapes C et D sont ensuite réitérées pour configurer d'autres radio-étiquettes 6, afin d'y écrire une commande correspondant à une action devant être exécutée par un équipement.

On réalise de la sorte une configuration particulièrement simple du système domotique. L'utilisateur n'a en effet qu'à sélectionner une action à exécuter et à approcher une radio-étiquette de son unité portable pour que cette radio-étiquette soit configurée, l'unité portable servant alors simplement de relai pour venir écrire la commande correspondant à l'action sélectionnée sur une radio-étiquette.

Une fois les différentes radio-étiquettes 6 configurées, l'utilisateur peut les disposer dans son logement. A titre d'exemple, l'utilisateur peut disposer les radio-étiquettes 6 à l'entrée de différentes pièces de son logement.

On mentionne ici qu'il est également possible qu'un équipement domotique soit vendu ou installé avec une radio-étiquette déjà préalablement configurée pour stocker une commande correspondant à une action devant être exécutée par l'équipement. Dans ce cas de figure, l'utilisateur est dispensé de l'étape de configuration.

On décrit ci-après en liaison avec la figure 2 un mode de réalisation possible d'une phase d'utilisation du système domotique selon le second aspect de l'invention.

Au cours d'une première étape E, l'utilisateur approche l'unité portable 3 d'une radio-étiquette 6. Dans cette phase d'utilisation, l'unité portable 3 est configurée pour lire, via le module de communication sans contact, la commande écrite dans la radio-étiquette qui correspond à une action devant être exécutée par un équipement.

Au cours d'une seconde étape F, l'unité portable 6 fait suivre à la centrale 1, via la liaison de communication avec la centrale, la commande lue sur la radio-étiquette 6. La liaison de communication est par exemple une liaison sans fil lorsque l'unité portable est dans la zone de portée du module de communication sans fil de la centrale. La liaison de communication peut en variante faire intervenir le réseau de communication cellulaire lorsque l'unité portable n'est pas dans la zone de portée du module de communication sans fil de la centrale.

Au cours d'une troisième étape G, la centrale transmet la commande reçue de l'unité portable à l'équipement concerné, de sorte que l'action correspondante est alors exécutée par l'équipement.

Ainsi par exemple, lorsque des radio-étiquettes sont positionnées à l'entrée du logement de l'utilisateur, ce dernier peut, lorsqu'il arrive chez lui, passer son unité portable à proximité d'une radio-étiquette configurée pour stocker la commande domotique correspondant à l'allumage d'une lampe. L'unité portable lit cette commande et la fait suivre à la centrale, lançant ainsi l'exécution de l'action.

L'unité portable 6 se comporte ainsi comme une télécommande particulièrement simple d'utilisation. Il n'y a effectivement pas de relation entre l'unité portable et l'équipement qui exécute l'action, et l'utilisateur se contente de passer son unité portable à proximité d'une radio-étiquette pour lancer l'exécution de cette action, l'unité portable servant alors de relai pour faire suivre la commande domotique lue sur une radio-étiquette à la centrale de commande domotique.

On aura compris que l'invention n'est pas limitée à un système domotique selon ses premier et second aspects, mais s'étend également à un procédé de configuration ainsi qu'à un procédé d'utilisation d'un tel système, lesquels procédés mettent en oeuvre une unité portable apte à dialoguer avec une centrale domotique et des radio-étiquettes pouvant être écrites/lues sans contact par l'unité portable pour réaliser la configuration/utilisation du système.

On relèvera pour finir que l'unité portable 6 est par exemple, sans pour autant que cela ne soit limitatif, un terminal de téléphonie mobile.

Par ailleurs, la centrale de commande prend la forme d'un boîtier autonome (destiné par exemple à être disposé dans une habitation). Mais la centrale de commande peut également être intégrée dans tout type d'équipement électronique, notamment dans des équipements ayant vocation à être disposés dans une telle habitation, tels qu'un ordinateur, un assistant personnel ou un boitier décodeur de télévision.

## Revendications

1. Système domotique comprenant une centrale de commande (1) permettant d'envoyer à un ou plusieurs équipements (2a, 2b, 2c) auxquels elle est reliée des commandes domotiques correspondant à des actions devant être exécutées, et une unité portable (3) comportant des moyens pour établir une liaison de communication avec la centrale (1),
**caractérisé en ce que** l'unité portable comporte un module de communication sans contact et **en ce que** l'unité portable est configurée pour, dans une phase d'utilisation du système domotique, lire, via le module de communication sans contact, une commande domotique écrite dans une radio-étiquette (6) située à proximité de l'unité portable qui correspond à une action devant être exécutée par un équipement, et faire suivre à la centrale, via la liaison de communication avec la centrale, la commande lue sur la radio-étiquette, de sorte que l'action puisse être exécutée par l'équipement après envoi de la commande à l'équipement depuis la centrale.

2. Système domotique comprenant une centrale de commande (1) permettant d'envoyer à un ou plusieurs équipements (2a, 2b, 2c) auxquels elle est reliée des commandes domotiques correspondant à des actions devant être exécutées, et une unité portable (3) comportant des moyens pour établir une liaison de communication avec la centrale (1),
**caractérisé en ce que** l'unité portable comporte un module de communication sans contact et en ce l'unité portable est configurée pour, dans une phase de configuration du système domotique, recevoir depuis la centrale, via la liaison de communication avec la centrale, une commande domotique correspondant à une action devant être exécutée par un équipement, et écrire, par le module de communication sans contact, ladite commande dans une radio-étiquette (6) située à proximité de l'unité portable.

3. Système selon la revendication 2, dans lequel l'unité portable est configurée pour réaliser une écriture sécurisée de la commande dans la radio-étiquette.

4. Système selon l'une des revendications 1 à 3, dans lequel l'unité portable et la centrale comportent chacune un module de communication sans fil, de manière à établir une liaison de communication sans fil entre la centrale et l'unité portable.

5. Système selon la revendication 4, dans lequel la liaison de communication sans fil est établie selon l'un des protocoles suivants : Bluetooth™, Wi-Fi, ZigBee, HomeRF.

6. Système selon l'une des revendications 1 à 3, dans lequel la liaison de communication sans fil fait intervenir un réseau de télécommunication cellulaire.

7. Système selon l'une des trois revendications précédentes, dans lequel la centrale comporte une radio-étiquette apte à être lue par le module de communication sans contact de l'unité portable dans laquelle sont écrites des informations utiles à l'établissement de la liaison de communication entre la centrale et l'unité portable.

8. Système selon l'une des revendications précédentes, comprenant en outre un module de paramétrage (5) stockant une table regroupant une liste des actions pouvant être exécutées par les équipements et une liste des commandes correspondantes.

9. Procédé d'utilisation d'un système domotique comprenant une centrale de commande permettant d'envoyer à un ou plusieurs équipements auxquels elle est reliée des commandes domotiques correspondant à des actions devant être exécutées, et une unité portable comportant des moyens pour établir une liaison de communication avec la centrale ainsi qu'un module de communication sans contact, comprenant les étapes consistant pour l'unité portable à lire, via le module de communication sans contact, une commande domotique écrite dans une radio-étiquette située à proximité de l'unité portable qui correspond à une action devant être exécutée par un équipement, et à faire suivre à la centrale, via la liaison de communication avec la centrale, la commande domotique lue sur la radio-étiquette, de sorte que l'action puisse être exécutée par l'équipement après envoi de la commande à l'équipement depuis la centrale.

10. Procédé de configuration d'un système domotique comprenant une centrale de commande permettant d'envoyer à un ou plusieurs équipements auxquels elle est reliée des commandes domotiques correspondant à des actions devant être exécutées, et une unité portable comportant des moyens pour établir une liaison de communication avec la centrale ainsi qu'un module de communication sans contact, comprenant les étapes consistant pour l'unité portable à recevoir depuis la centrale, via la liaison de communication avec la centrale, une commande domotique correspondant à une action devant être exécutée par un équipement, et à écrire, par le module de communication sans contact, ladite commande domotique dans une radio-étiquette située à proximité de l'unité portable.

## Patentansprüche

1. Haussteuerungssystem, enthaltend eine Steuerzentrale (1), die es ermöglicht, an eine oder mehrere Einrichtungen (2a, 2b, 2c), mit denen sie verbunden ist, Haussteuerungsbefehle zu senden, die Aktionen entsprechen, die ausgeführt werden sollen, und eine tragbare Einheit (3), die Mittel zum Herstellen einer Kommunikationsverbindung mit der Zentrale (1) umfasst,
**dadurch gekennzeichnet, dass** die tragbare Einheit ein kontaktloses Kommunikationsmodul umfasst und dadurch, dass die tragbare Einheit dafür ausgebildet ist, in einer Verwendungsphase des Haussteuerungssystems über das kontaktlose Kommunikationsmodul einen Haussteuerungsbefehl zu lesen, der in einem in der Nähe der tragbaren Einheit gelegenen Funkanhänger (6) geschrieben ist, der einer Aktion entspricht, die von einer Einrichtung ausgeführt werden soll, und den auf dem Funkanhänger gelesenen Befehl über die Kommunikationsverbindung mit der Zentrale an die Zentrale folgen zu lassen, sodass die Aktion, nach Senden des Befehls von der Zentrale an die Einrichtung, von der Einrichtung ausgeführt werden kann.

2. Haussteuerungssystem, enthaltend eine Steuerzentrale (1), die es ermöglicht, an eine oder mehrere Einrichtungen (2a, 2b, 2c), mit denen sie verbunden ist, Haussteuerungsbefehle zu senden, die Aktionen entsprechen, die ausgeführt werden sollen, und eine tragbare Einheit (3), die Mittel zum Herstellen einer Kommunikationsverbindung mit der Zentrale (1) umfasst,
**dadurch gekennzeichnet, dass** die tragbare Einheit ein kontaktloses Kommunikationsmodul umfasst und dadurch, dass die tragbare Einheit dafür ausgebildet ist, in einer Konfigurationsphase des Haussteuerungssystems über die Kommunikationsverbindung mit der Zentrale einen Haussteuerungsbefehl von der Zentrale zu empfangen, der einer Aktion entspricht, die von einer Einrichtung ausgeführt werden soll, und über das kontaktlose Kommunikationsmodul den Befehl in einen in der Nähe der tragbaren Einheit gelegenen Funkanhänger (6) zu schreiben.

3. System nach Anspruch 2, wobei die tragbare Einheit dafür ausgebildet ist, ein gesichertes Schreiben des Befehls in den Funkanhänger auszuführen.

4. System nach einem der Ansprüche 1 bis 3, wobei die tragbare Einheit und die Zentrale jede ein drahtloses Kommunikationsmodul umfassen, um eine drahtlose Kommunikationsverbindung zwischen der Zentrale und der tragbaren Einheit herzustellen.

5. System nach Anspruch 4, wobei die drahtlose Kommunikationsverbindung nach einem der folgenden Protokolle hergestellt wird: Bluetooth™, Wi-Fi, ZigBee, HomeRF.

6. System nach einem der Ansprüche 1 bis 3, wobei die drahtlose Kommunikationsverbindung ein zellulares Telekommunikationsnetz mitbeteiligt.

7. System nach einem der drei vorstehenden Ansprüche, wobei die Zentrale einen Funkanhänger umfasst, der geeignet ist, von dem kontaktlosen Kommunikationsmodul der tragbaren Einheit gelesen zu werden, in welchem Informationen geschrieben sind, die zur Herstellung der Kommunikationsverbindung zwischen der Zentrale und der tragbaren Einheit nützlich sind.

8. System nach einem der vorstehenden Ansprüche, weiter ein Parametriermodul (5) enthaltend, das eine Tabelle speichert, die eine Liste der Aktionen, die von den Einrichtungen ausgeführt werden können, und eine Liste der entsprechenden Befehle zusammengefasst.

9. Verfahren zum Verwenden eines Haussteuerungssystems, enthaltend eine Steuerzentrale, die es ermöglicht, an eine oder mehrere Einrichtungen, mit denen sie verbunden ist, Haussteuerungsbefehle zu senden, die Aktionen entsprechen, die ausgeführt werden sollen, und eine tragbare Einheit, die Mittel zum Herstellen einer Kommunikationsverbindung mit der Zentrale umfasst, sowie ein kontaktloses Kommunikationsmodul, enthaltend die Schritte, die für die tragbare Einheit darin bestehen, über das kontaktlose Kommunikationsmodul einen Haussteuerungsbefehl zu lesen, der in einem in der Nähe der tragbaren Einheit gelegenen Funkanhänger geschrieben ist, der einer Aktion entspricht, die von einer Einrichtung ausgeführt werden soll, und darin, über die Kommunikationsverbindung mit der Zentrale den auf dem Funkanhänger gelesenen Haussteuerungsbefehl an die Zentrale folgen zu lassen, sodass die Aktion, nach Senden des Befehls von der Zentrale an die Einrichtung, von der Einrichtung ausgeführt werden kann.

10. Verfahren zum Konfigurieren eines Haussteuerungssystems, enthaltend eine Steuerzentrale, die es ermöglicht, an eine oder mehrere Einrichtungen, mit denen sie verbunden ist, Haussteuerungsbefehle zu senden, die Aktionen entsprechen, die ausgeführt werden sollen, und eine tragbare Einheit, die Mittel zum Herstellen einer Kommunikationsverbindung mit der Zentrale umfasst, sowie ein kontaktloses Kommunikationsmodul, enthaltend die Schritte, die für die tragbare Einheit darin bestehen, über die Kommunikationsverbindung mit der Zentrale einen Haussteuerungsbefehl von der Zentrale zu empfangen, der einer Aktion entspricht, die von einer Einrichtung ausgeführt werden soll, und darin, über das kontaktlose Kommunikationsmodul den Haussteuerungsbefehl in einen in der Nähe der tragbaren Einheit gelegenen Funkanhänger zu schreiben.

## Claims

1. Home automation system comprising a central control unit (1) for sending, to one or more devices (2a, 2b, 2c) to which it is connected, home automation instructions corresponding to actions to be executed, and a portable unit (3) including means for establishing a communication link with the central control unit (1),
**characterised in that** the portable unit includes a contactless communication module and **in that** the portable unit is configured, in a home automation phase of use, for reading, via the contactless communication module, a home automation instruction written in a radiolabel (6) located in the vicinity of the portable unit, which corresponds to an action to be executed by a device, and for reporting to the central control unit, via the communication link with said central control unit, the instruction read on the radiolabel so that the action can be executed by the device after the sending of the instruction to the device from the central control unit.

2. Home automation system comprising a central control unit (1) for sending, to one or more devices (2a, 2b, 2c) to which it is connected, home automation instructions corresponding to actions to be executed, and a portable unit (3) including means for establishing a communication link with the central control unit (1),
**characterised in that** the portable unit includes a contactless communication module and **in that** the portable unit is configured, in a home automation phase of configuration, for receiving, from the central control unit, via the communication link with the central control unit, a home automation instruction corresponding to an action to be executed by a device, and for writing, by the contactless communication module, said instruction in a radiolabel (6) located in the vicinity of the portable unit.

3. System according to claim 2, wherein the portable unit is configured for writing the instruction in the radiolabel in a secure manner.

4. System according to one of claims 1 to 3, wherein the portable unit and the central control unit each include a wireless communication module, so as to establish a wireless communication link between the central control unit and the portable unit.

5. System according to claim 4, wherein the wireless communication link is established according to one of the following protocols: Bluetooth™, Wi-Fi, ZigBee, or HomeRF.

6. System according to one of claims 1 to 3, wherein the wireless communication link uses a cellular telecommunications network.

7. System according to one of the three previous claims, wherein the central control unit includes a radiolabel capable of being read by the contactless communication module of the portable unit in which information is written, which information is adapted for establishing the communication link between the central control unit and the portable unit.

8. System according to one of the previous claims, further comprising a configuration module (5) storing a table that contains a list of actions that can be executed by the devices and a list of corresponding instructions.

9. Method for using a home automation system comprising a central control unit for sending, to one or more devices to which it is connected, home automation instructions corresponding to actions to be executed, and a portable unit including means for establishing a communication link with the central control unit, in addition to a contactless communication module comprising the steps, performed by the portable unit, of reading, via the contactless communication module, a home automation instruction written in a radiolabel located in the vicinity of the portable unit, which corresponds to an action to be executed by a device, and of reporting to the central control unit, via the communication link with said central control unit, the home automation instruction read on the radiolabel so that the action can be executed by the device after the sending of the instruction to the device from the central control unit.

10. Method for configuring a home automation system comprising a central control unit for sending, to one or more devices to which it is connected, home automation instructions corresponding to actions to be executed, and a portable unit including means for establishing a communication link with the central control unit, in addition to a contactless communication module, comprising the steps, performed by the portable unit, of receiving, from the central control unit, via the communication link with the central control unit, a home automation instruction corresponding to an action to be executed by a device, and of writing, by the contactless communication module, said home automation instruction in a radiolabel located in the vicinity of the portable unit.
